# DEMANDE DE BREVET EUROPEEN

(11) **EP 4 656 037 A1**
(43) Date de publication de la demande: **03.12.2025**
(21) Numéro de dépôt: 25178738.8
(22) Date de dépôt: 26.05.2025
(51) Int. Cl.: A01G 31/02, A01K 61/10, A01K 63/04, A01K 61/00

(54) **SYSTÈME D'AQUAPONIE**

(30) Priorité: 28.05.2024 FR 2405479
(71) Demandeur: Les Nouvelles Fermes, 33300 Bordeaux (FR)
(72) Inventeur: MOREL, Paul, 33000 Bordeaux (FR)
(74) Mandataire: Aquinov

(57) **Abrégé**

Un système d'aquaponie (1) comprenant au moins un dispositif de culture piscicole (4) comprenant au moins un bassin (41) de culture piscicole, au moins un dispositif de filtration mécanique (5) agencé pour filtrer l'eau en sortie des bassins de culture piscicole, au moins un dispositif de production de courant d'eau (6), ledit dispositif de production de courant d'eau (6) est agencé de sorte à fournir au moins un courant apte à réaliser une fonction de filtration biologique et de réoxygénation de l'eau dans les bassins de culture piscicole, au moins un dispositif de culture de végétaux (7) comprenant au moins un bac de culture de végétaux (71), au moins une unité de reprise de l'eau (8) du dispositif de culture de végétaux (7), au moins une première unité de réoxygénation (81) de l'eau du dispositif de culture de végétaux (7), au moins un système de contrôle de la circulation de l'eau reliant le dispositif de culture piscicole (4) et le dispositif de culture de végétaux (7), et au moins une deuxième unité de réoxygénation de l'eau (10) du dispositif de culture piscicole (4) agencée en sortie du dispositif de filtration mécanique (5) de sorte à réoxygéner l'eau issue de la filtration d'un système de culture piscicole (2) vers les bassins de culture piscicole (41).

Selon l'invention, le système d'aquaponie (1) comprend au moins un dispositif de contrôle de l'eau (9) comprenant au moins une pompe (91), de sorte à réaliser une fonction d'échange d'eau entre le système de culture piscicole (2) comprenant le dispositif de culture piscicole (4), le dispositif de filtration mécanique (5) et le dispositif de production de courant d'eau (6) et un système de culture de végétaux (3) comprenant le dispositif de culture de végétaux (7), l'unité de reprise d'eau (8) et la première unité de réoxygénation (81).

## Description

L'invention se rapporte au domaine technique de l'aquaculture et la culture de végétaux, plus particulièrement aux systèmes de culture combinant l'aquaculture et la culture de végétaux, plus connue sous le nom de culture d'aquaponie.

L'aquaponie est donc une méthode d'agriculture combinant la culture contrôlée d'organismes aquatiques et de végétaux dans un environnement aménagé, afin de créer un écosystème efficace et mutuellement bénéfique aux différentes agricultures.

En tirant parti de la symbiose naturelle entre l'aquaculture et la culture de végétaux, un dispositif d'aquaponie permet une production alimentaire durable, dans le sens où cette dernière nécessite beaucoup moins de litres d'eau pour produire la même quantité de nourriture que dans les types d'agriculture conventionnelle.

De la même manière, la culture en aquaponie permet une consommation réduite à nulle des engrais ou pesticides, nécessaire aux agricultures classiques, dont les impacts sur l'environnement et sur la santé humaine peuvent être néfastes. En effet, ce système se basant sur la synergie productive de plusieurs compartiments biologiques en environnement contrôlé, il interdit toute introduction de composés extérieurs pouvant nuire à tout ou partie de ces compartiments.

Selon le niveau d'interaction entre ces populations vivantes, cela peut par exemple exclure l'usage d'antibiotiques qui risqueraient de nuire aux bactéries bénéfiques du système, alors qu'ils sont utilisés en routine dans les élevages traditionnels. De la même manière, une écrasante majorité des pesticides sont proscrits pour ne pas nuire aux animaux de l'élevage, alors qu'ils sont utilisés dans les exploitations maraîchères traditionnelles voire même biologiques. Cette interconnexion permet de plus de produire naturellement les engrais des végétaux directement dans le système à partir des fèces de l'élevage, réduisant de ce fait grandement la nécessité de complémentation.

L'aquaponie est une méthode de culture dans laquelle la majorité des nutriments essentiels pour la culture de végétaux sont fournis par l'élevage d'organismes aquatiques, le tout dans un environnement contrôlé permettant d'augmenter le rendement de production par la recherche du meilleur compromis en termes de sélection génétique d'animaux, de sélection variétale de plantes, et des conditions de culture et d'élevage, notamment climatiques ou encore des propriétés physico-chimiques de l'eau. Selon le niveau de technicité installé, l'optimisation de la production peut également éliminer les contraintes de températures, de nutrition ou encore de rythmes naturels comme les saisons ou le cycle jour/nuit.

Ainsi, le contrôle de l'environnement, avec par exemple les facteurs de pH, de température, ou encore de concentration de nutriments, doit s'adapter aux besoins spécifiques des espèces, d'animaux aquatiques mais aussi de végétaux, et ainsi trouver le meilleur équilibre de fonctionnement pour optimiser la croissance de tous les organismes.

Ce niveau de contrôle permet donc de maximiser les taux de croissance à la fois des végétaux et des organismes aquatiques, tout en minimisant les risques de maladies et de parasites, ce qui se traduit par une optimisation des rendements.

Par conséquent, sa capacité à produire des cultures avec une grande efficacité et dans un encombrement réduit en fait une option intéressante pour des régions où les terres arables sont limitées, les conditions climatiques difficiles, les engrais difficiles d'accès ou encore à proximité des zones urbaines nécessitant un fort approvisionnement en nourriture.

Cependant, les systèmes maraîchers et aquacoles nécessitent un contrôle continu des paramètres physico-chimiques de l'eau afin d'assurer que la qualité d'eau de culture et d'élevage reste bonne et suffisamment stable pour ne pas entraîner de stress, occasionnant une diminution de croissance, ou pire, de mortalité. La technicité, la périodicité et la précision de ce contrôle varient selon le modèle de culture et d'élevage choisi, et de sa tolérance à la qualité et variation de qualité de l'eau.

Notamment, la gestion manuelle et continue de ces paramètres entraîne un coût humain et technologique trop important. De plus, sans surveillance et contrôle, il est difficile de maintenir l'équilibre délicat entre les différents compartiments biologiques, ce qui augmente le risque de défaillance du système et réduit son efficacité globale.

Pour répondre à ces problèmes, il est connu des systèmes d'aquaponie dont le contrôle et la surveillance de ces paramètres sont automatisés. Cependant, une telle automatisation continue de surveillance entraîne un coût excessif et une consommation trop importante en énergie.

L'invention se place donc dans ce contexte et cherche à répondre à l'ensemble des besoins précités tout en résolvant l'ensemble des inconvénients précités.

Ainsi, l'invention cherche à proposer un système d'aquaponie, dont les paramètres physico-chimiques sont surveillés afin de garantir une production optimale, tout en étant peu consommateur en énergie, fiable, facile d'entretien et également peu coûteux afin d'assurer la rentabilité du modèle.

De la même manière, l'invention propose un système d'aquaponie dont la réoxygénation de l'eau est optimisée.

### Présentation de l'invention

L'invention a pour objet un système d'aquaponie, fiable, peu coûteux et permettant d'avoir un équilibre contrôlé des propriétés physico-chimiques de l'eau afin d'obtenir une production optimale de végétaux et d'organismes aquatiques.

À cet effet, il a été mis au point, un système d'aquaponie comprenant au moins un dispositif de culture piscicole comprenant au moins un bassin de culture piscicole, au moins un dispositif de filtration mécanique agencé pour filtrer l'eau en sortie des bassins de culture piscicole, au moins un dispositif de production de courant d'eau, ledit dispositif de production de courant d'eau est agencé de sorte à fournir au moins un courant apte à réaliser une fonction de filtration biologique et de réoxygénation de l'eau dans les bassins de culture piscicole, au moins un dispositif de culture de végétaux comprenant au moins un bac de culture de végétaux, au moins une unité de reprise de l'eau du dispositif de culture de végétaux, au moins une première unité de réoxygénation de l'eau du dispositif de culture de végétaux, au moins un système de contrôle de la circulation de l'eau reliant le dispositif de culture piscicole et le dispositif de culture de végétaux, et au moins une deuxième unité de réoxygénation de l'eau du dispositif de culture piscicole agencée en sortie du dispositif de filtration mécanique de sorte à réoxygéner l'eau issue de la filtration d'un système de culture piscicole vers les bassins de culture piscicole.

Selon l'invention, le système d'aquaponie comprend au moins un dispositif de contrôle de l'eau comprenant au moins une pompe, de sorte à réaliser une fonction d'échange d'eau entre le système de culture piscicole comprenant le dispositif de culture piscicole, le dispositif de filtration mécanique et le dispositif de production de courant d'eau et un système de culture de végétaux comprenant le dispositif de culture de végétaux, l'unité de reprise d'eau et la première unité de réoxygénation.

On comprend alors, selon l'invention, que système d'aquaponie comprend deux boucles de production pouvant être indépendantes l'une de l'autre, à savoir les systèmes de culture piscicole et de végétaux mais peuvent également formé une seule boucle de production piscicole et de végétaux ayant un dispositif de contrôle de l'eau permettant de faire les échanges nécessaires entre les deux systèmes de production afin d'obtenir une synergie provoquant une optimisation de la production desdits systèmes de productions piscicole et de végétaux.

Il est également compris que l'eau en sortie du système de culture piscicole passant par le dispositif de contrôle de l'eau vers le système de culture de végétaux est chargée en nutriments et accessoirement en oxygène.

De la même manière, l'eau transitant par le dispositif d'échange d'eau en provenance de la sortie du système de culture de végétaux vers le dispositif de culture piscicole est filtrée et accessoirement réoxygénée.

Ainsi, dans l'invention, l'eau peut circuler en boucle fermée entre le système de culture piscicole et le système de culture de végétaux, en transitant par le dispositif de contrôle de l'eau. Plus particulièrement, l'eau peut circuler dans un sens allant du dispositif de culture piscicole vers le dispositif de contrôle de l'eau, puis du dispositif de contrôle de l'eau vers le dispositif de culture de végétaux, du dispositif de culture de végétaux vers le dispositif de contrôle de l'eau et enfin du dispositif de contrôle de l'eau vers le dispositif de culture aquacole.

Dès lors, l'invention propose un effet synergique entre les sous-ensembles de culture piscicole et de végétaux. Cette synergie se manifeste par une optimisation de l'utilisation de l'eau grâce au système en boucle fermée, permettant sa réutilisation entre les deux sous-ensembles et réduisant ainsi la consommation globale. La gestion efficace des nutriments est un autre effet important, où les déchets produits par la culture piscicole sont utilisés comme nutriments pour la culture des végétaux, créant un cycle de nutriments efficace. Cette approche conduit à une filtration biologique naturelle, les plantes et les micro-organismes associés agissant comme un filtre pour l'eau de la culture piscicole.

La synergie entre les deux systèmes permet également une réduction des coûts d'intrants, diminuant le besoin en engrais pour les plantes et en systèmes de filtration complexes pour les poissons. L'échange contrôlé d'eau entre les deux systèmes améliore la qualité de l'eau, maintenant des conditions optimales pour les deux types de cultures.

Cette interaction synergique favorise potentiellement une augmentation de la productivité, permettant une croissance plus rapide et plus saine des deux cultures. Le dispositif de contrôle de l'eau offre un contrôle précis des paramètres, permettant d'ajuster finement les conditions pour chaque sous-système.

Le système présente une flexibilité et une modularité appréciables, la possibilité d'ajuster les échanges d'eau permettant d'adapter le système à différentes espèces de poissons et de plantes. Cette approche contribue à une réduction de l'empreinte écologique grâce à une utilisation efficace des ressources et une réduction des déchets.

Les unités de réoxygénation spécifiques à chaque sous-système assurent une oxygénation optimisée, garantissant des niveaux d'oxygène appropriés pour les poissons et les plantes. Le contrôle des échanges d'eau peut également aider à la gestion des pathogènes en limitant leur propagation entre les deux systèmes.

Enfin, le système crée un équilibre écologique en formant un mini-écosystème où les deux cultures se soutiennent mutuellement, imitant ainsi les processus naturels. Cette synergie globale entre les sous-ensembles de culture piscicole et de végétaux permet une utilisation plus efficace des ressources, une réduction des déchets, et une amélioration globale de la productivité et de la durabilité du système d'aquaponie.

En outre, le fait que l'eau puisse circuler dans ce sens particulier, permet d'alimenter en nutriments les végétaux avec les déchets issus de la culture piscicole et de fournir une eau filtrée par les végétaux à la culture piscicole sans ajout d'eau supplémentaire, ce qui réduit drastiquement les besoins en eau neuve de la culture piscicole et les besoins en nutriments pour la culture de végétaux.

De préférence, le système de circulation de l'eau forme une boucle fermée étanche afin d'éviter la perte d'eau et de limiter le besoin d'ajout d'eau pour la culture piscicole et des végétaux. Plus particulièrement, le système de circulation d'eau se présente sous la forme de tube reliant l'ensemble des éléments constituant le système d'aquaponie selon l'invention.

Ainsi, sans sortir du cadre de l'invention il est envisageable d'avoir un système de culture piscicole comprenant plusieurs lignes de bassins de culture piscicole afin d'obtenir en simultanée la culture d'espèces différentes.

Dans un mode de réalisation préféré, l'unité de reprise de l'eau comprend la première unité de réoxygénation de l'eau.

Dans un mode de réalisation préféré, les tubes formant le système de circulation de l'eau du système d'aquaponie sont agencés de manière aérienne.

En effet, le fait que les tubes de circulation de l'eau soient ménagés hors du sol permet une maintenance, ainsi qu'une détection des fuites plus aisées. De plus, l'installation est moins complexe puisqu'elle ne nécessite pas d'étape pour enterrer les tubes du dispositif de circulation de l'eau.

Dans un autre mode de réalisation, les tubes formant le dispositif de circulation de l'eau du système d'aquaponie peuvent être agencés de manière souterraine.

Dans ce mode de réalisation, les opérations de mise sous terre sont certes plus lourdes mais compensé par une usure des tubes plus faibles.

De préférence, le dispositif de création de courant d'eau est sous la forme d'une pompe agencée pour former ledit premier courant.

De plus, le premier courant permet de remonter les éléments physiques présents dans les bassins de culture piscicole afin de permettre leur filtration.

La pompe du dispositif d'échange d'eau est apte à être arrêtée, ce qui permet de pouvoir contrôler totalement le volume d'échange entre les dispositifs de culture aquacole et de culture de végétaux.

Ainsi, on comprend que le dispositif d'échange d'eau permet de réaliser une fonction de gestion des rythmes de croissance entre les dispositifs de culture aquacole et de culture de végétaux, notamment en envoyant le surplus de niveau d'eau, ou d'une eau en trop haute teneur en nutriments vers la culture de végétaux et permet de réaliser une filtration plus fine afin de réinjecter ladite eau dans les bassins de culture aquacole.

Dans un mode de réalisation particulier, l'échange du surplus du niveau d'eau est réalisé de manière gravitaire uniquement dans le sens du dispositif de culture aquacole vers le dispositif de culture de végétaux.

Dans un mode de réalisation préféré, le dispositif de contrôle de l'eau comprend au moins deux pompes afin de gérer dans les deux sens les échanges d'eau entre le système de culture de végétaux et le système de culture piscicole.

Ainsi, le dispositif de contrôle de l'eau peut être amener à faire l'échange d'un surplus de niveau d'eau entre les deux systèmes de culture différents. Cet échange peut être réalisé par l'activation d'une ou des pompes, ce qui permet un échange d'eau dans les deux sens, à savoir depuis le dispositif de culture piscicole vers le dispositif de culture de végétaux et inversement.

On comprend également que l'unité de reprise d'eau permet de faire une zone tampon, stockant l'eau filtrée et réoxygénée pour fournir ladite eau aux bacs de culture prédéterminés en fonction de l'usage, à savoir les bacs de cultures de végétaux et/ou les bacs de culture piscicole en fonction de leurs besoins respectif.

De préférence, le dispositif de production de courant est également agencé de sorte à fournir un courant apte à réaliser une fonction d'hydrocurage dans les bassins de culture piscicole.

Dans un mode de réalisation préféré, lesdits bacs de culture de végétaux et lesdits bassins de culture aquacole sont modulables.

On entend par l'expression « lesdits bacs de culture de végétaux sont modulables », le fait que les bacs de culture de végétaux comprennent au moins une entrée et une sortie, chacune étant apte à être en partie ou totalement fermée ou ouverte. Ainsi, une telle gestion individuelle des bacs de culture de végétaux permet de moduler le débit de renouvellement pour l'adapter à la production de végétaux en place, ou bien de choisir de manière volontaire les bacs pouvant réaliser la culture de végétaux.

De la même manière, les bacs de culture de végétaux comprennent des tailles et des volumes pouvant varier en fonction des espèces végétales à produire.

Au surplus, l'aménagement des bacs peut également varier dans l'espace qui leur est accordé afin d'optimiser leur culture en fonction des espèces à produire.

On entend par l'expression « lesdits bassins de culture aquacole sont modulables », le fait que la taille, le volume ou le taux de renouvellement d'eau des différents bassins peuvent être différents et s'adapter à la croissance de l'espèce aquatique élevée.

En effet, la densité, le nombre à l'intérieur des bassins de culture aquacole de l'espèce aquatique élevée est inchangé au cours de la croissance des organismes aquatiques. Ainsi, la taille des bassins doit augmenter à mesure et en fonction de la croissance et du nombre desdits organismes aquatiques.

Dans un mode de réalisation particulier, le système d'aquaponie comprend une unité de minéralisation, agencée entre l'unité de reprise d'eau et le dispositif de filtration mécanique.

Avantageusement, la présence d'une unité de minéralisation va permettre l'élimination de la boue en sortie des bassins de culture piscicole. Ainsi, le dispositif de culture piscicole ne produit aucun effluent et peut permettre la revalorisation de ladite boue.

Dans un mode de réalisation préféré, la première unité d'oxygénation de l'eau est sous la forme d'une cascade d'eau.

Ainsi, et toujours afin de limiter le coût du système d'aquaponie, la cascade permet une réoxygénation de l'eau de manière mécanique et simple sans nécessiter l'ajout d'une pompe dédiée ou d'une motorisation dédiée afin de réoxygéner l'eau du système de culture de végétaux.

On comprend alors que la cascade est perpétuelle permettant une réoxygénation de l'eau du système de culture de végétaux. Ainsi, il peut être réalisé une réoxygénation du dispositif de culture de végétaux vers le dispositif de culture de végétaux afin de créer une boucle de réoxygénation fermée dans le système de culture de végétaux.

Avantageusement, la deuxième unité de réoxygénation comprend une première sous unité de dégazage de l'eau et/ou une deuxième sous unité d'injection d'oxygène dans l'eau.

De préférence, la fonction de réoxygénation de l'eau dans les bassins de culture piscicole est d'abord assurée par une première sous unité de dégazage simple, fonctionnant à l'air, et permettant le dégazage du gaz carbonique émis par l'élevage et le retour, au moins partiel, à saturation en oxygène de l'eau .

De préférence, la deuxième sous unité d'injection d'oxygène dans l'eau est sous la forme d'une unité d'injection d'oxygène liquide à contrecourant du courant formé par le dispositif de production de courant dans les bassins de culture piscicole. Cette combinaison de dispositif permet un ajustement précis de la teneur finale en oxygène dans l'eau d'élevage tout en limitant la consommation d'oxygène liquide et donc des coûts de fonctionnement liés.

Dans un mode de réalisation préféré, le système de culture piscicole et le système de culture de végétaux comprennent chacun une unité de contrôle des paramètres physico-chimiques de l'eau .

Avantageusement, les unités de contrôle des paramètres physico-chimiques de l'eau permettent d'agir sur l'actionnement du dispositif de contrôle de l'eau afin de maintenir, à des taux prédéterminés, les propriétés physico-chimiques de l'eau allant dans les bassins de culture piscicole et de végétaux.

Les paramètres surveillés sont par exemple la température de l'eau, le pH, la teneur en oxygène et en nutriments.

Dans un mode de réalisation particulier, le dispositif de contrôle de l'eau réalise une fonction de maintien des niveaux d'eau entre les différents dispositifs de culture de végétaux et de culture piscicole.

Avantageusement, le système de culture piscicole comprend une unité de contrôle bactérien agencée en sortie du dispositif de filtration mécanique de sorte à contrôler la population bactérienne en sortie du dispositif de filtration mécanique vers les bassins de culture piscicole.

La présence d'une unité de contrôle bactérien et notamment de sa population permet une régulation fine de la dite population, ce qui évite un accroissement non désiré des bactéries pouvant être néfaste à la culture piscicole.

Dans un mode de réalisation particulier, l'unité de contrôle bactérien est sous la forme d'un dispositif à UV.

Dans un mode de réalisation particulier, le système de culture piscicole comprend une unité de dénitrification permettant d'éliminer l'excès d'azote produit par la culture piscicole et qui n'aurait pas pu être éliminé par la culture de végétaux avant la réintroduction de l'eau dans les bassins de culture piscicole afin de limiter les risques d'empoissonnement de l'eau.

De préférence, les bacs de culture de végétaux sont dépourvus de substrat de culture de végétaux.

On comprend ainsi, que les bacs de culture de végétaux sont dépourvus de terre, plus particulièrement les bacs de culture de végétaux sont des bassins de culture de végétaux uniquement remplis d'eau.

Avantageusement, au moins un bac de culture de végétaux comprend une unité d'oxygénation supplémentaire de l'eau comprise dans l'au moins un bac de culture de végétaux.

Dans un mode de réalisation particulier, plusieurs bacs de végétaux comprennent chacun une unité d'oxygénation supplémentaire.

De préférence, l'ensemble des bacs de culture de végétaux comprennent chacun une unité d'oxygénation supplémentaire.

Ainsi, on comprend que la présence d'une unité supplémentaire dans les bacs de culture de végétaux permet de pallier les périodes fortement demandeuses en oxygène et de gérer la culture de différentes espèces de végétaux d'un bac à l'autre en fonction, notamment de leur besoin spécifique en oxygène afin d'optimiser la croissance de tout type d'espèce de végétaux.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] est une représentation schématique du système d'aquaponie selon l'invention, dans un mode de réalisation particulier.
[Fig. 2] est une représentation schématique du système d'aquaponie, selon un autre mode de réalisation.
[Fig. 3] est une représentation schématique du système d'aquaponie selon un autre mode de réalisation.

Pour des raisons de simplicité et de clarté d'illustration, les éléments représentés dans les figures n'ont pas été nécessairement réalisés à l'échelle. Ainsi, des dimensions et des proportions relatives de certains éléments peuvent être exagérées ou encore atténuées.

Dans la description qui suit, les éléments identiques, par structure ou par fonction, apparaissant sur différentes figures conservent, sauf précision contraire, les mêmes références.

Il est à noter que sur ces figures les éléments structurels et/ou fonctionnels communs aux différentes variantes peuvent présenter les mêmes références.

Bien entendu, diverses autres modifications peuvent être apportées à l'invention dans le cadre des revendications annexées.

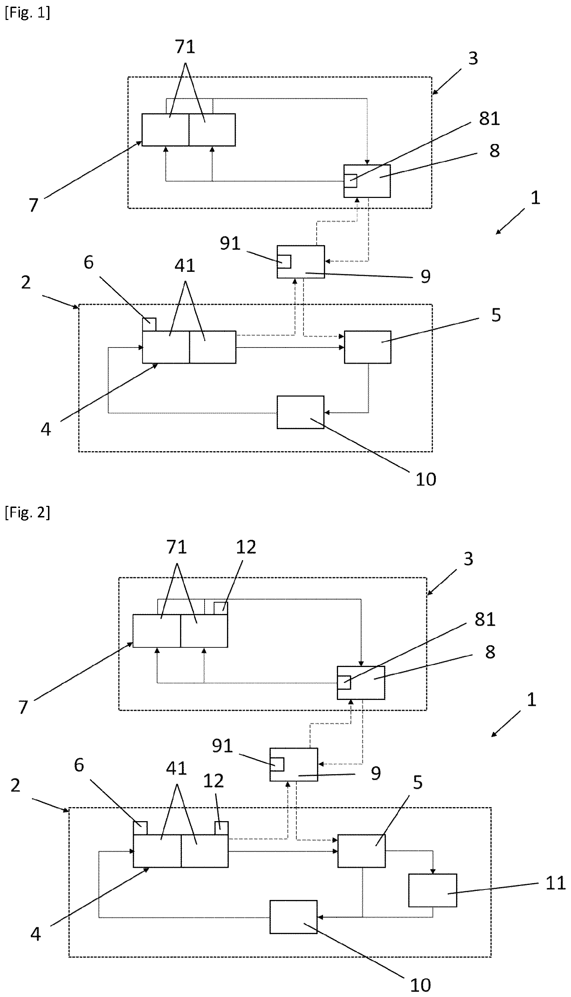

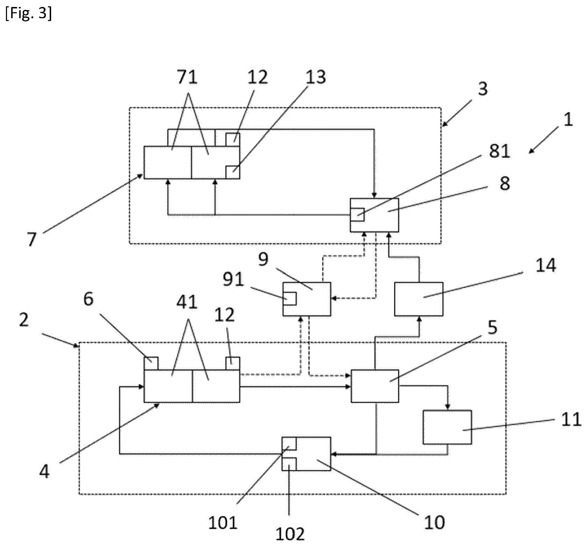

En référence aux [Fig. 1] à [Fig. 3], l'invention concerne un système d'aquaponie 1 comprenant un dispositif de culture piscicole 4 comprenant plusieurs bassins 41 de culture piscicole et un dispositif de culture de végétaux 7 comprenant une multitude de bacs de culture de végétaux 71.

Les différents bassins 41 de culture piscicole sont utilisés pour la culture d'une seule espèce aquatique et sur des stades de croissances différents.

Lesdits bacs de culture de végétaux 71 et lesdits bassins de culture piscicole 41 sont modulables entre eux respectivement.

On comprend alors que les bacs de culture de végétaux 71 comprennent au moins une entrée et une sortie, chacune étant apte à être en partie ou totalement fermée ou ouverte et que ces derniers comprennent des tailles et des volumes pouvant varier en fonction des espèces végétales à produire.

Ainsi, une telle gestion individuelle des bacs de culture de végétaux 71 permet de moduler le débit de renouvellement pour l'adapter à la production de végétaux en place, ou bien de choisir de manière volontaire les bacs 71 pouvant réaliser la culture de végétaux.

Les bacs de culture de végétaux 71 sont dépourvus de substrat de culture de végétaux. On comprend alors que les végétaux reposent sur des flotteurs avec leur racines en contact direct dans l'eau contenu dans les bac 71 de culture de végétaux.

De plus, et afin d'apporter une oxygénation spécifique de l'eau des bassins 71 en fonction des espèces de végétaux que l'on souhaite produire, chaque bac de culture de végétaux 71 comprend une unité d'oxygénation supplémentaire 13 de l'eau comprise dans les bacs de culture de végétaux 71.

De la même manière, les bassins de culture piscicole 41 comprennent des dimensions différentes et s'adapte à la croissance de l'espèce aquatique élevée.

De la même manière, le système d'aquaponie 1 comprend un système de circulation de l'eau reliant le dispositif de culture piscicole 4 et le dispositif de culture de végétaux 7, ledit système de circulation de l'eau étant sous la forme de tube reliant l'ensemble des éléments constituant le système d'aquaponie 1.

Au surplus, et afin de permettre une réoxygénation de l'eau en sortie du dispositif de culture de végétaux 7, le système d'aquaponie 1 comprend une unité de reprise de l'eau 8 comprenant une première unité de réoxygénation de l'eau 81, ladite première unité de réoxygénation est sous la forme d'une cascade d'eau.

Afin de permettre la culture piscicole le système d'aquaponie 1 comprend également un dispositif de filtration mécanique 5 agencé pour filtrer l'eau en sortie des bassins 41 de culture piscicole, un dispositif de production de courant d'eau 6, ledit dispositif de production de courant d'eau 6 est agencé de sorte à fournir au moins un courant apte à réaliser une fonction de filtration biologique et de réoxygénation de l'eau dans les bassins 41 de culture piscicole et une deuxième unité de réoxygénation de l'eau 10 du dispositif de culture piscicole 4 agencée en sortie du dispositif de filtration mécanique 5 de sorte à réoxygéner l'eau issue de la filtration du système de culture piscicole 2 vers les bassins de culture piscicole 41.

De la même manière, le système de culture piscicole 2 comprend une unité de contrôle bactérien 11 agencée en sortie du dispositif de filtration mécanique 5 de sorte à contrôler la population bactérienne en sortie du dispositif de filtration mécanique 5 vers les bassins de culture piscicole 41.

En effet, la culture piscicole nécessite un contrôle continue de la population bactérienne dans l'environnement des espèces aquacole afin d'éviter tout risque de prolifération non contrôlée de la population bactérienne pouvant avoir des effets néfastes sur ladite culture piscicole.

La deuxième unité de réoxygénation 10 comprend une première sous unité 101 de dégazage de l'eau ce qui permet de d'injecter de l'air de manière douce afin de rééquilibrer les gaz dissouts et une deuxième sous unité 102 d'injection d'oxygène liquide dans l'eau à contrecourant afin de permettre une sursaturation en oxygène de l'eau.

Ainsi, l'utilisation des deux sous unité de réoxygénation 101, 102 permet une surcharge en oxygène de l'eau des bassins 41 afin que l'eau en fin du circuit des bassins 41 de culture piscicole comprend une teneur en oxygène suffisante pour la culture des espèces aquacoles choisies, notamment lorsque la densité des poissons dans les bassins est importante.

Afin de permettre les échanges d'oxygène et de nutriments pour améliorer la production de végétaux et piscicole, tout en limitant la consommation d'eau, le système d'aquaponie 1 comprend un dispositif de contrôle de l'eau 9 comprenant au moins une pompe 91, de sorte à réaliser une fonction d'échange d'eau entre le système de culture piscicole 2 comprenant le dispositif de culture piscicole 4, le dispositif de filtration mécanique 5 et le dispositif de production de courant d'eau 6 et un système de culture de végétaux 3 comprenant le dispositif de culture de végétaux 7 et l'unité de reprise d'eau 8.

Au surplus, le système d'aquaponie 1 comprend une unité de minéralisation 14 agencée entre l'unité de reprise d'eau 8 et le dispositif de filtration mécanique 5 afin de permettre l'élimination de la boue en sortie des bassins 41 de culture piscicole.

Pour permettre de maintenir et de surveiller, à des taux prédéterminés et optimum, les propriétés physico-chimiques de l'eau allant dans les bassins de culture piscicole et de végétaux le système de culture piscicole 2 et le système de culture de végétaux 3 comprennent chacun une unité de contrôle des paramètres physico-chimiques de l'eau 12, ce qui permet d'améliorer le rendement de production des végétaux et des espèces aquacoles et cela de manière spécifique pour chaque espèces différentes.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Système d'aquaponie (1) comprenant :
- Au moins un dispositif de culture piscicole (4) comprenant au moins un bassin (41) de culture piscicole ;
- Au moins un dispositif de filtration mécanique (5) agencé pour filtrer l'eau en sortie des bassins de culture piscicole ;
- Au moins un dispositif de production de courant d'eau (6), ledit dispositif de production de courant d'eau (6) est agencé de sorte à fournir au moins un courant apte à réaliser une fonction de filtration biologique et de réoxygénation de l'eau dans les bassins de culture piscicole ;
- Au moins un dispositif de culture de végétaux (7) comprenant au moins un bac de culture de végétaux (71) ;
- Au moins une unité de reprise de l'eau (8) du dispositif de culture de végétaux (7) ;
- Au moins une première unité de réoxygénation (81) de l'eau du dispositif de culture de végétaux (7) ;
- Au moins un système de contrôle de la circulation de l'eau reliant le dispositif de culture piscicole (4) et le dispositif de culture de végétaux (7) ; et
- Au moins une deuxième unité de réoxygénation de l'eau (10) du dispositif de culture piscicole (4) agencée en sortie du dispositif de filtration mécanique (5) de sorte à réoxygéner l'eau issue de la filtration d'un système de culture piscicole (2) vers les bassins de culture piscicole (41) ;
**Caractérisé en ce qu'**il comprend au moins un dispositif de contrôle de l'eau (9) comprenant au moins une pompe (91), de sorte à réaliser une fonction d'échange d'eau entre le système de culture piscicole (2) comprenant le dispositif de culture piscicole (4), le dispositif de filtration mécanique (5) et le dispositif de production de courant d'eau (6) et un système de culture de végétaux (3) comprenant le dispositif de culture de végétaux (7),I'unité de reprise d'eau (8) et la première unité de réoxygénation (81).

2. Système d'aquaponie selon la revendication précédente, **caractérisé en ce que** lesdits bacs de culture de végétaux (71) et les bassins de culture piscicole (41) sont modulables.

3. Système d'aquaponie selon l'une des revendications précédentes, **caractérisé en ce qu'**il comprend une unité de minéralisation (14) agencée entre l'unité de reprise d'eau (8) et le dispositif de filtration mécanique (5).

4. Système d'aquaponie selon l'une des revendications précédentes, **caractérisé en ce que** la première unité d'oxygénation de l'eau (81) est sous la forme d'une cascade d'eau.

5. Système d'aquaponie selon l'une des revendications précédentes, **caractérisé en ce que** la deuxième unité de réoxygénation (10) comprend une première sous unité (101) de dégazage de l'eau et/ou une deuxième sous unité (102) d'injection d'oxygène dans l'eau.

6. Système d'aquaponie selon l'une des revendications précédentes, **caractérisé en ce que** le système de culture piscicole (2) et le système de culture de végétaux (3) comprennent chacun une unité de contrôle des paramètres physico-chimiques de l'eau (12).

7. Système d'aquaponie selon l'une des revendications précédentes, **caractérisé en ce que** le système de culture piscicole (2) comprend une unité de contrôle bactérien (11) agencée en sortie du dispositif de filtration mécanique (5) de sorte à contrôler la population bactérienne en sortie du dispositif de filtration mécanique (5) vers les bassins de culture piscicole (41).

8. Système d'aquaponie selon l'une des revendications précédentes, **caractérisé en ce que** les bacs de culture de végétaux (71) sont dépourvus de substrat de culture de végétaux.

9. Système d'aquaponie selon la revendication précédente, **caractérisé en ce que** au moins un bac de culture de végétaux (71) comprend une unité d'oxygénation supplémentaire (13) de l'eau comprise dans l'au moins un bac de culture de végétaux (71).
